Europäisches Patentamt

(19) European Patent Office

Office européen des brevets

(11) Numéro de publication: **0 101 364 B1**

(12) **FASCICULE DE BREVET EUROPEEN**

(45) Date de publication du fascicule du brevet:
**19.11.87**

(21) Numéro de dépôt: **83401583.6**

(22) Date de dépôt: **01.08.83**

(51) Int. Cl.⁴: **G 01 N 21/67**

(54) Procédé pour la détermination des concentrations, à l'état dissous et à l'état précipité, d'un élément, tel que l'aluminium, dans un échantillon métallique d'analyse par spectrométrie d'émission optique, et appareillage pour sa mise en oeuvre.

(30) Priorité: **03.08.82 FR 8213662**

(43) Date de publication de la demande:
**22.02.84 Bulletin 84/8**

(45) Mention de la délivrance du brevet:
**19.11.87 Bulletin 87/47**

(84) Etats contractants désignés:
**AT BE CH DE GB IT LI LU NL SE**

(56) Documents cités:
**BE - A - 885 642
US - A - 4 111 556**

**E.L. GROVE: "ANALYTICAL EMISSION SPECTROSCOPY", part 2, 1972, pages 90-98, chapitre 6.2.5.7., Marcel Dekker, Inc., New York, USA; "Excitation of spectra: Low-voltage spark and condensed (pulsed-discharged) arc"
CHEMICAL ABSTRACTS, vol. 92, 1980, page 699, no. 208409x, Columbus, Ohio, USA; A.A.NIZOVTSEVA: "Determination of silicon in steels and cast irons and of aluminum in steels usind the "Spektr" SL-12 styloscope"
JOURNAL OF APPLIED SPECTROSCOPY, vol. 28, no. 2, février 1978, pages 137-139, Plenum Publishing Corporation, New York, USA; V.G.REZCHIKOV et al.: "Spectral analysis of steels with the use of a combined discharge"**

(73) Titulaire: **INSTITUT DE RECHERCHES DE LA SIDERURGIE FRANCAISE (IRSID), 185, rue du Président Roosevelt, F-78105 Saint Germain-en-Laye Cédex (FR)**

(72) Inventeur: **Wiliay, Gérard, route d'Ars Jussy, F-57130 Ars sur Moselle (FR)**
Inventeur: **Wittmann, André, 4, place du Général de Gaulle, F-57000 Metz (FR)**

(74) Mandataire: **Ventavoli, Roger et al, INSTITUT DE RECHERCHES DE LA SIDERURGIE FRANCAISE (IRSID) 185, rue Président Roosevelt, F-78105 Saint-Germain-en-Laye (FR)**

## Description

La présente invention concerne la détermination des concentrations, à l'état dissous et à l'état précipité, d'un élément dans un échantillon métallique d'analyse par Spectrométrie d'Emission Optique (SEO). En particulier, mais non limitativement, l'invention s'applique aux déterminations séparées, dans un échantillon d'acier, notamment d'acier calmé, des concentrations en aluminium dissous, $[Al]_d$, et en aluminium précipité, $[Al]_p$, sous forme d'inclusions oxydées.

On sait que l'aluminium est un produit couramment utilisé dans le cadre de l'élaboration des métaux, notamment en sidérurgie, soit comme élément d'addition pour la mise à la nuance finale, soit plus encore comme agent de désoxydation pour le calmage du bain métallique avant coulée et solidification.

Quel que soit l'usage recherché, l'adjonction d'aluminium dans un métal en fusion oxydé, tel que l'acier après affinage de la fonte à l'oxygène, conduit toujours à la formation de deux phases: une phase soluble constituée par de l'aluminium à l'état dissous dans le métal et une phase insoluble constituée d'aluminium précipité sous forme d'inclusions à base d'alumine. Ces inclusions oxydées, qui peuvent coalescer en amas de grande taille (0,3–3 mm de diamètre, voire au-delà) pénalisent de beaucoup, non seulement les propriétés du produit final obtenu, mais également la conduite du processus même d'élaboration de celui-ci à l'état liquide.

Ainsi, en sidérurgie classique, et plus encore dans les techniques modernes d'élaboration de l'acier, telle que la coulée continue par exemple, il devient de plus en plus impératif de pouvoir régler le plus finement possible la teneur du bain en aluminium, c'est-à-dire de pouvoir être capable de discerner correctement la proportion d'aluminium dissous de celle d'aluminium précipité.

Pour ce faire, on procède généralement à des prélèvements d'échantillons de métal en fusion dont l'analyse permet à l'opérateur d'intervenir pour ajuster les quantités d'aluminium, soit au cours même de l'élaboration du bain, soit pour les bains à élaborer ultérieurement.

Par le passé, on a longtemps procédé à l'analyse par voie chimique. Cette méthode, qui présente l'avantage d'être directe et précise, reste cependant trop lente, ce qui ne la rend pleinement applicable que pour l'élaboration des bains métalliques ultérieurs.

Ces dernières années ont vu se développer des techniques d'analyse plus performantes, grâce à la mise sur le marché d'appareils de Spectrométrie d'Emission Optique (SEO). On rappelle que le principe SEO consiste schématiquement à établir, entre la surface d'un échantillon surfacé et une électrode placée à faible distance, des décharges électroluminescentes (arcs électriques) dont le spectre de raies est spécifique des différents éléments contenus dans l'échantillon, et dont les intensités de raies peuvent être reliées aux concentrations en ces éléments.

La technique d'analyse SEO, bien qu'indirecte (utilisation d'abaques d'étalonnage sur échantillons connus) a cependant pour elle l'avantage d'être suffisamment rapide pour permettre une intervention en correction sur le bain métallique en cours même d'élaboration. Mais, à la connaissance des inventeurs, la méthode ne permet encore d'atteindre, avec une précision souhaitable, que la concentration totale de l'élément à doser [US-A-4 111 556 ou J. of Applied Spectroscopy vol. 28, n° 2, Fev. 78, p. 137–139, Plenum Publishing Corp. New York, USA] ou sa concentration à l'état dissous, après élimination physique des inclusions non métalliques contenant la phase précipitée (BE-A-885 642).

Des tentatives semblent avoir été menées pour parvenir à distinguer l'aluminium dissous de l'aluminium précipité sur la base d'une exploitation du profil d'étincelage en fonction du temps de la raie de l'aluminium, un tel profil se présentant toujours en une courbe formée d'un pic suivi d'un palier traduisant que l'intensité d'étincelage ne varie plus avec le temps.

Toutefois, à la connaissance des inventeurs, ces tentatives n'ont pas permis jusqu'ici d'obtenir des résultats suffisamment précis.

La présente invention a précisément pour but d'apporter une solution à ce problème.

A cet effet, l'invention a pour objet un procédé pour la détermination des concentrations dissoutes et précipitées d'un élément, tel que l'aluminium, dans un échantillon métallique d'analyse par spectrométrie d'émission optique, notamment un échantillon d'acier, procédé selon lequel on détermine lesdites concentrations à partir du profil d'étincelage dans le temps de l'élément et par lecture sur des abaques d'étalonnage préétablies sur des échantillons connus, procédé caractérisé en ce que:

— on soumet l'échantillon à des conditions d'excitation douces durant toute la durée de l'analyse, de manière à éviter tout phénomène de refusion locale de l'échantillon,

— on partage le profil de l'intensité d'étincelage ainsi obtenu pour l'élément à analyser en au moins deux parties successives: une partie initiale formée d'un pic et une partie terminale formée d'un palier sensiblement horizontal,

— on considère une valeur normalisée $I_3$ de l'intensité du profil d'étincelage complet et on détermine, à partir de $I_3$, la concentration totale $[M]_t$ de l'élément à analyser par lecture sur l'abaque d'étalonnage correspondant construit sur la base de ladite valeur normalisée,

— on considère une valeur normalisée $I_2$ de l'intensité dudit palier horizontal et on détermine, à partir de $I_2$, la concentration à l'état dissous $[M]_d$ de l'élément à analyser par lecture sur l'abaque d'étalonnage correspondant construit sur la base de ladite valeur normalisée,

— et à partir des valeurs $I_3$, $I_2$ et de la concentration totale $[M]_t$, on calcule la concentration à l'état précipité $[M]_p$ de l'élément à analyser à l'aide de la relation:

$$[M]_p = [M]_t \frac{J-I_2}{I_3-I_0}$$

où $I_0$ est la valeur à l'origine de l'intensité sur l'abaque d'étalonnage donnant la concentration totale $[M]_t$ et J est la valeur normalisée de l'intensité du profil d'étincelage représentative du cumul des concentrations à l'état dissous et précipité de l'élément à analyser.

Selon une mise en œuvre préférée, J est la valeur normalisée $I_1$ de l'intensité du pic du profil d'étincelage.

Selon une variante, les valeurs normalisées $I_1$, $I_2$ et $I_3$ considérées sont les moyennes arithmétiques des valeurs des intensités correspondantes.

L'invention a également pour objet un appareil de Spectrométrie d'Emission Optique pour la détermination des concentrations d'éléments dans un échantillon d'analyse des métaux, appareil constitué par:

– un spectromètre à étincelage comprenant un générateur d'excitation et au moins un circuit de détection, qui est celui de la raie de l'élément à analyser, ledit circuit présentant un intégrateur piloté par une commande à horloge;

– et un ensemble de mesure et de traitement des signaux issus du circuit de détection et comprenant une unité de mesure de la charge de l'intégrateur et des moyens de restitution des résultats reliés à cette unité de mesure par une chaîne de traitement des signaux délivrés par ladite unité;

– appareil caractérisé en ce que le générateur d'excitation comprend un condensateur de capacité inférieure à 10 μF, en ce que l'intégrateur comprend un microcondensateur de capacité de 100 pF environ, en ce que la commande à horloge est conçue pour piloter ledit intégrateur selon un cycle de «charge – décharge» du microcondensateur plus bref que la période d'étincelage du générateur, et en ce que ladite chaîne de traitement comprend successivement, depuis la sortie de l'unité de mesure de la charge de l'intégrateur: une unité de stockage et de classement des pulses constitutifs du profil d'étincelage et formés par les signaux issus de ladite unité; une unité de segmentation dans le temps du signal en au moins deux parties successives définissant respectivement le pic et le palier du profil d'étincelage, cette unité étant suivie par une unité de calcul des valeurs normalisées (par exemple les valeurs moyennes) des intensités des différentes parties segmentées du profil d'étincelage, ladite unité de calcul étant reliée à l'entrée d'un comparateur dont l'autre entrée est reliée à une mémoire qui lui fournit les couples de valeurs «intensité d'étincelage/concentration» constitutifs des abaques d'étalonnage, et dont la sortie est connectée à des moyens de restitution des résultats.

Selon une autre variante, le circuit de détection comprend un condensateur habituel de spectromètre d'émission optique, connu associé à une unité de mesure, pilotée par une horloge pour la mesure «au vol» de sa charge électrique, de manière à fournir des signaux d'intégration représentatifs des différentes parties du profil d'étincelage.

Dans ce cas également, conformément à une réalisation, le circuit de détection est relié à l'entrée d'un comparateur dont l'autre entrée est reliée à une mémoire qui lui fournit les couples de valeurs «intensité d'étincelage/concentration» constitutifs des abaques d'étalonnage, et dont la sortie est connectée à des moyens de restitution des résultats.

Comme on l'aura sans doute déjà compris, l'invention consiste donc, dans ses caractéristiques déterminantes, d'une part, à mener l'opération d'analyse SEO selon des conditions d'excitation douces de l'échantillon, c'est-à-dire de manière à éviter tout phénomène de refusion même locale à la surface de l'échantillon, puis, d'autre part, à recueillir le signal émis à l'aide de micro-intégrateurs (capacité de l'ordre de 100 pF) et, enfin, à traiter par le calcul le signal en considérant que le palier terminal de la courbe du profil d'étincelage est représentatif de la concentration en aluminium dissous, que l'intégralité de cette courbe est représentative de la concentration en aluminium total et, le cas échéant, que le pic initial de ce profil correspond à une grandeur qui reflète la superposition de la concentration en aluminium dissous avec celle de l'aluminium précipité, cette dernière étant cependant surévaluée, comme on le comprendra mieux par la suite.

En effet, l'invention sera mieux comprise et d'autres aspects et avantages apparaîtront plus clairement au vu de la description qui suit donnée en référence aux planches de dessins annexées sur lesquelles:

– la figure 1 est une représentation schématique et fonctionnelle d'un appareil SEO selon l'invention,

– la figure 2 représente un profil de l'intensité d'étincelage en fonction du temps, tel qu'il peut être obtenu par l'appareil SEO de la figure 1 sur un échantillon donné.

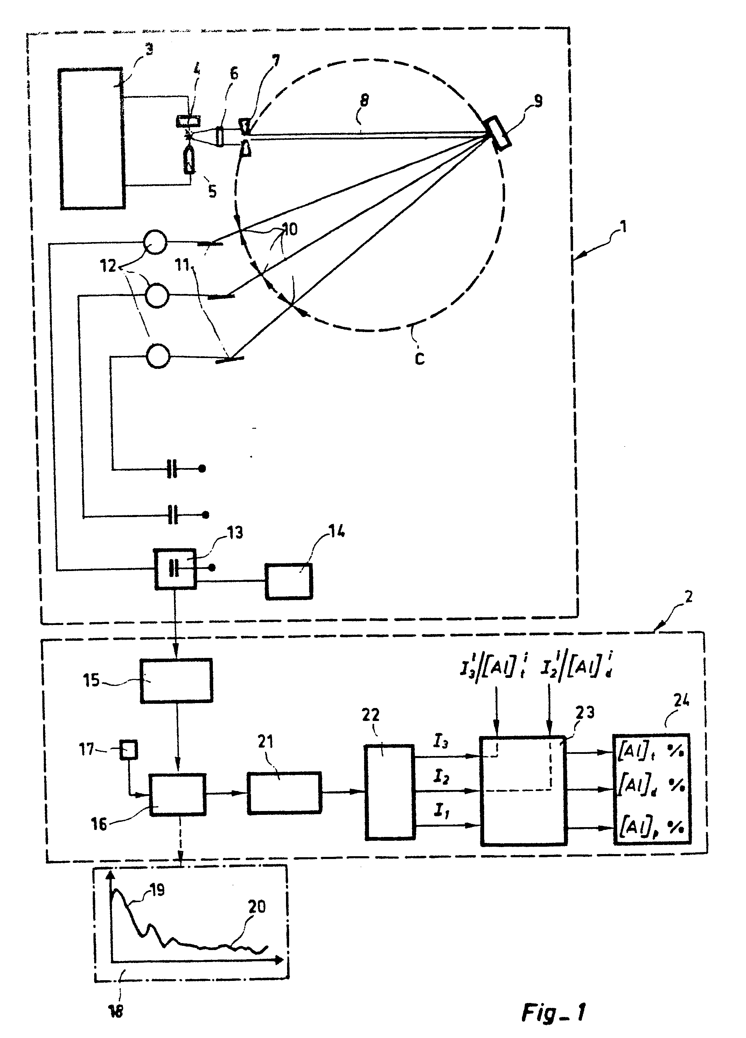

Comme on le voit sur la figure 1 l'appareil se compose d'un ensemble d'analyse 1, ou spectromètre proprement dit, et d'un ensemble 2 de mesure et de traitement du signal fourni par le spectromètre 1.

Ce dernier est de type tout à fait classique, à deux particularités près comme on le verra par la suite. Il se compose: d'un générateur d'excitation 3 établissant un arc électrique à une fréquence donnée, par exemple 100 Hz (fréquence industrielle redressée), arc qui s'établit entre un échantillon surfacé 4 à analyser et une contre-électrode 5 placée à faible distance; d'une optique composée d'une lentille convergente 6, dont le foyer-objet est sur l'arc et d'une fente 7 qui recueille l'émission d'arc et envoie un pinceau lumineux 8 sur un réseau de diffraction 9 qui émet le spectre de raies relatif à l'ensemble des constituants de l'échantillon 4. Différentes fenêtres de scrutation 10 sont placées en regard du réseau 9 sur un cercle C (dit de ROWLAND) qui passe par ce réseau et par le centre de la fente 7. Chaque fenêtre reçoit ainsi, et transmet à un miroir 11, un rayonnement lumineux à une longueur d'onde donnée, représentative d'un élément à analyser dans l'échantillon. Dans l'exemple considéré, on a représenté trois fenêtres 10 seulement et on admettra que celle la plus proche de l'optique 6,7 sur la figure reçoit le rayonnement relatif à la raie de l'aluminium ($\lambda$ = 396,1 nm), ce dernier étant choisi ici comme élément à analyser. Des photomultiplicateurs 12, placés au voisinage des miroirs 11, chargent des intégrateurs 13, selon un régime pulsatoire de 100 charges élémentaires par seconde correspondant à la fréquence d'étincelage de 100 Hz.

Les particularités évoquées au début, qui différencient le spectromètre décrit selon l'invention d'un spectromètre classique, se situent à un double niveau:

1. au niveau du générateur 3, où l'excitation de l'échantillon s'opère sous des conditions d'étincelage douces au moyen d'arcs produits par décharge sous quelques centaines de volts (par exemple entre 300 et 500 volts selon la distance séparant l'échantillon de la contre-électrode 5) d'un condensateur à capacité réduite, inférieure à une dizaine de microfarads, par exemple, pour fixer les idées, de 5 µF ou moins. A titre de comparaison, les conditions d'excitation habituelles en SEO classique s'opèrent avec des capacités de l'ordre de 10–20 µF,

2. au niveau des intégrateurs 13, lesquels sont pilotés par une unité 14 selon un cycle «charge-décharge» déterminé, très bref, correspondant à la période de l'étincelage, soit, dans le cas présent, à un cycle maximum d'1/100e de seconde avec un temps de décharge très rapide afin de remettre l'intégrateur 13 à charge nulle avant l'arrivée de la charge élémentaire suivante.

A cet effet, on pourra avantageusement utiliser des micro-condensateurs de très faible capacité, de l'ordre de 100 pf, ce qui s'avère généralement suffisant pour emmagasiner la charge électrique élémentaire des étincelles les plus intenses et délivrer ainsi à l'ensemble de mesure et de traitement 2 un signal électrique discriminé sous forme d'un train continu de pulses à la fréquence de 100 pulses par seconde, pendant toute la durée de l'analyse.

L'ensemble de mesure et de traitement 2 se compose d'une unité 15 pour la mesure de la charge instantanée du micro-condensateur 13 et par une chaîne de traitement en aval de l'unité 15, comprenant dans le sens chronologique du traitement:

– une unité de stockage et de classement 16, pilotée par une horloge 17 synchronisée sur l'unité 14, pour ranger en file les signaux élémentaires représentatifs des intensités de chaque pulse, et dont la lecture, si on la visualisait sur un écran tel que 18, laisserait apparaître le profil d'étincelage avec son pic initial 19 et son palier final 20,

– une unité 21 pour la segmentation du profil d'étincelage en au moins deux parties, à savoir précisément le pic initial 19 et le palier final 20,

– une unité 22 de calcul des valeurs normalisées, par exemple les moyennes arithmétiques des intensités des pulses formant le palier ($I_2$), l'intégralité du profil ($I_3$) et, le cas échéant, le pic ($I_1$),

– une unité 23 de comparaison et de calcul des concentrations en aluminium total, dissous et précipité. Cette unité reçoit d'une part les valeurs $I_2$, $I_3$ (et éventuellement $I_1$) calculées dans l'unité 22 et, d'autre part, les couples de valeurs "$I_3^i/[AL]_d^i$" et "$I_2^i/[AL]_d^i$" constitutives des abaques d'étalonnages préétablies sur des échantillons connus.

Par comparaison respective de $I_2$ avec "$I_2^i/[AL]_d^i$" et de $I_3$ avec $I_3^i/[AL]_d^i$", l'unité 23 détermine les concentrations $[AL]_d$ et $[AL]_t$. Puis, à partir de $I_3$, $I_2$ et $[AL]_t$, l'unité calcule $[AL]_p$ selon la relation indiquée précédemment où le paramètre J peut être soit $I_3$ (1ère variante de calcul selon l'invention), soit $I_2$ (2ème variante de calcul selon l'invention).

Quant à $I_0$ (ordonnée à l'origine de l'abaque "$I_3^i/[AL]_t^i$", cette valeur est introduite comme constante dans le calculateur 23. Ce dernier délivre les valeurs $[AL]_t$, $[AL]_d$ et $[AL]_p$ en % pondéraux qui sont recueillies sur l'afficheur (ou enregistreur) 24.

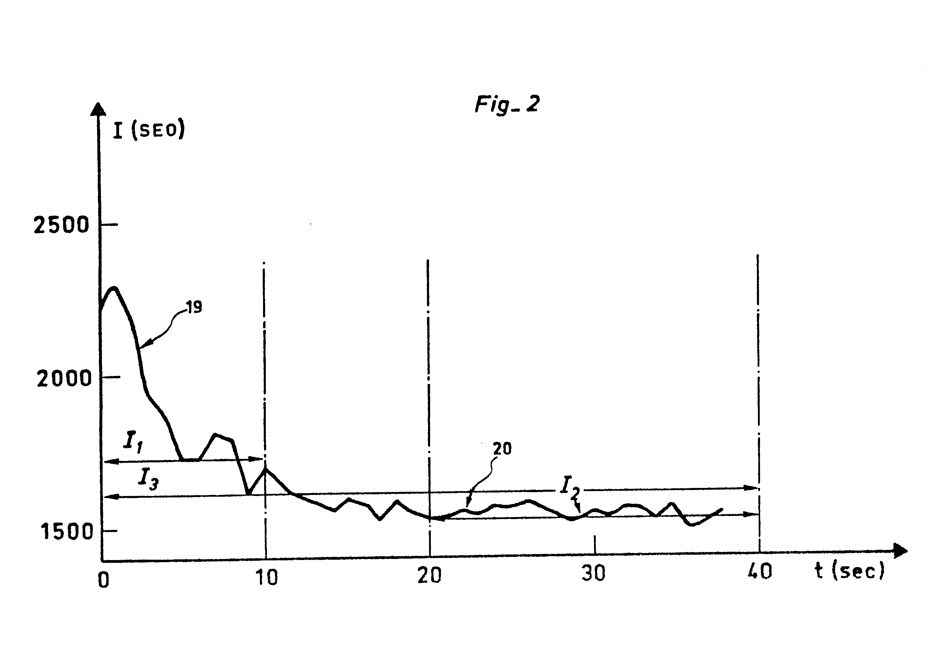

On va maintenant expliquer plus en détail l'invention en se référant également à la figure 2 représentative du profil d'étincelage de l'aluminium au cours d'une analyse dont la durée a été arbitrairement réglée à 40 sec.

Les inventeurs ont été amenés à retenir le principe d'une analyse SEO sous des conditions d'excitation douces de l'échantillon, afin que l'élément à analyser, en l'occurrence ici l'aluminium, fournisse des signaux distincts pour la phase métallique soluble $(AL)_d$, et sa phase oxydée $(Al)p$. L'étude sur l'analyse de l'acier liquide leur a en effet enseigné que l'étincelle d'excitation en SEO devait normalement attaquer préférentiellement les inclusions oxydées dispersées à la surface de l'échantillon.

Toutefois, les premiers essais effectués avec des conditions de décharge standard, montées dans la source du générateur 2 (fig. 1), se sont montrés trop énergiques pour mettre en évidence le phénomène recherché: la refusion locale de l'échantillon confondait toutes les phases de l'aluminium.

En essayant alors des capacités de décharge de plus faibles valeurs, les signaux analytiques différenciés escomptés ont été obtenus. Les inventeurs ont retenu à cet égard les paramètres suivants du circuit de décharge durant toute l'opération d'analyse: capacité de 5 µF, résistance de 2,2 Ω et une tension de 400 Volts.

Dans ces conditions, le tracé du profil d'étincelage -Fig. 2- (on dit aussi «profil de flambage») construit à partir de points de mesure toutes les secondes, i.e. représentatifs de l'intensité moyenne de trains de 100 pulses (soit 4000 pulses et 40 points de mesure sur le tracé), confirme clairement l'hypothèse faite a priori: les inclusions alumineuses, formées essentiellement d'alumine, mais également de composés silico-alumineux, d'aluminate de chaux et même éventuellement de nitrure d'aluminium, répondent en début d'excitation. La teneur relative en aluminium de ces inclusions est supérieure à la teneur moyenne de l'aluminium dissous dans le métal et les signaux recueillis sont plus intenses que ceux qui vont s'établir à une valeur plus faible et plus stable lorsque ces inclusions auront été volatilisées.

Ainsi, comme le montre la figure 2, la première partie du profil de flambage (0–10 sec.), à savoir le pic 19, compte donc, en superposition, l'intensité de l'aluminium dissous et celle de l'aluminium inclusionnaire, i.e. l'aluminium précipité.

Le signal se stabilise ensuite entre 10 et 20 secondes pour devenir constant sur le palier 20 entre 20 et 40 secondes. Le niveau d'intensité du palier 20 est celui de l'aluminium dissous puisque l'aluminium précipité a été volatilisé auparavant et que les conditions d'excitation douces évitent de creuser la zone d'impact sur la surface de l'échantillon et d'arracher d'autres inclusions sous-cutanées.

Par ailleurs, l'aluminium total de l'échantillon est à rattacher à l'ensemble des signaux émis durant toute la période de 40 sec.

En ce qui concerne maintenant l'exploitation du profil de flambage ainsi obtenu, l'interprétation des observations précédentes a conduit les inventeurs à retenir les solutions suivantes:

1. Aluminium Total $(Al)_t$

Le dosage de $(Al)_t$ demande un maximum de précaution, car il intervient dans le calcul de la teneur en aluminium précipité $[Al]_p$. Les inventeurs ont retenu à cet effet la moyenne arithmétique $I_3$ des intensités des pulses de l'ensemble du profil de flambage, soit des 4000 pulses.

Par simple lecture sur la droite d'étalonnage avec les valeurs en $[Al]_t$ obtenues par analyse chimique sur échantillons connus, on détermine aisément la concentration en $(Al)t$, soit $[Al]_t$ correspondant à $I_3$.

2. Aluminium dissous $(Al)_d$

Pour le dosage de $(Al)_d$, les inventeurs ont retenu la moyenne arithmétique $I_2$ des intensités des 2000 pulses constituant le palier 20.

De la même façon que pour $(Al)_t$, la simple lecture sur un abaque d'étalonnage spécifique à l'aluminium dissous cette fois, construit sur la base de la valeur normalisée retenue ici (à savoir la moyenne arithmétique des intensités des pulses du palier), permet de déterminer sans difficulté la concentration en $(Al)_d$ de l'échantillon d'analyse, soit $[Al]_d$ correspondant à la valeur $I_2$.

Il doit être souligné que cette manière d'opérer constitue aux yeux des inventeurs un des éléments le plus sûr des études effectuées tant par la stabilité de la mesure physique que par la précision de la chimie classique dans ses analyses de référence.

3. Aluminium précipité $(Al)_p$

La solution qui vient immédiatement à l'esprit pour déterminer la concentration $[Al]_p$ consisterait à effectuer la différence entre les deux déterminations précédentes, puisque la teneur en aluminium total, $[Al]_t$, est évidemment la somme $[Al]_d + [Al]_p$.

Une telle solution est cependant peu satisfaisante, car à l'imprécision sur la détermination de $[Al]_p$ viendrait s'ajouter celle de $[Al]_d$.

Comme l'aluminium précipité est présent le plus souvent à des teneurs inférieures à 0,008%, sa concentration $[Al]_p$ pourrait alors être entachée d'erreurs très conséquentes.

Le profil de flambage donnent la possibilité de faire apparaître directement l'émission SEO due à l'aluminium précipité, l'exploitation des mesures a donc été menée selon le processus suivant:

La moyenne des pulses de 0 à 1000 (pic 19), qui a été nommée $I_1$, est le reflet de la superposition de l'aluminium dissous et de l'aluminium précipité. La moyenne des pulses de 2000 à 4000 (palier 20), nommée $I_2$, représente l'aluminium dissous. La différence $I_1-I_2$ donne donc une valeur de l'intensité nette que l'on peut rattacher à l'aluminium précipité.

En réalité, cette moyenne $I_1-I_2$ représente une intensité surévaluée, car la loi de LOMAKIN, qui régit l'émission lumineuse en fonction de la concentration, est de nature exponentielle et la concentration relative de l'aluminium dans les inclusions (près de 50% dans $Al_2O_3$) est beaucoup plus importante que celle dans l'acier (de l'ordre de 0,02–0,05%). Autrement dit, si on peut dans ce dernier cas assimiler la petite fraction d'exponentielle concernée à une fonction linéaire (applications courantes), il n'en va pas de même pour les très fortes teneurs en aluminium dans les inclusions, où l'on se trouve alors sur une partie de la courbe exponentielle à croissance très rapide en intensité. Cette remarque permet de mieux comprendre pourquoi les inventeurs prennent comme valeur représentative de l'aluminium total $(Al)_t$ non pas la moyenne de 0–1000 pulses (pic 19), i.e. $I_1$, comme il serait tentant de le faire à première vue, mais la moyenne $I_3$ des 4000 pulses (profil de flambage en entier).

Cette solution présente trois avantages essentiels:

– elle permet de doser l'aluminium total $(Al)_t$ en prenant en compte l'ensemble des intensités élémentaires recueillies,

– la valeur moyenne, prise sur les 4000 pulses au lieu de 1000, pondère de façon très sensible l'excès d'intensité SEO qui affecte l'aluminium précipité,

– enfin, l'introduction, dans cette moyenne, d'une séquence longue et stable en intensité, à savoir la période 20 à 40 sec. correspondant au palier 20, tamponne la dispersion statistique importante qui entache les pulses relatifs à la séquence initiale de 0 à 10 sec. (pic 19).

Ceci étant, la détermination de la concentration $[Al]_p$ en aluminium précipité commence donc par le dosage de l'aluminium total, soit $[Al]_t$, obtenu à partir de $I_3$ et de l'abaque d'étalonnage par la méthode traditionnelle en SEO indiquée auparavant.

En multipliant alors cette concentration $[Al]_t$ par la fraction d'intensité nette pondérée qui revient à l'aluminium précipité, on obtient la concentration $[Al]_p$ en aluminium précipité.

Exprimée différemment, cette opération s'écrit:

$$[Al]_p = [Al]_t \frac{I_1 - I_2}{I_3 - I_0} \qquad (1)$$

où $[Al]_p$ et $[Al]_t$ sont généralement exprimés en % pondérés et où $I_0$ est l'ordonnée à l'origine de la droite de dosage de l'aluminium sur l'abaque d'étalonnage de l'aluminium total.

Exemples

On va maintenant donner les résultats d'analyse obtenus à partir d'essais comparatifs sur des échantillons d'aciers calmés à l'aluminium, permettant de vérifier l'excellence du procédé selon l'invention.

Exemples

Parmi le grand nombre d'essais effectués, et qui avaient pour but de comparer les résultats des analyses SEO obtenus selon l'invention avec les valeurs délivrées par la chimie, nous avons extrait le tableau suivant:

| Echantillons | aluminium total $Al_t$ | | aluminium dissous $Al_d$ | | aluminium précipté $Al_p$ | |
|---|---|---|---|---|---|---|
| | Chimie | SEO | Chimie | SEO | Chimie | SEO |
| (1) | 42 | 45 | 35 | 38 | 7 | 8 |
| (2) | 19 | 18 | 16 | 16 | 3 | 3 |
| (3) | 32 | 31 | 29 | 28 | 3 | 3 |
| (4) | 14 | 14 | 11 | 13 | 3 | 4 |
| (5) | 42 | 43 | 37 | 38 | 5 | 4 |
| (6) | 32 | 33 | 24 | 27 | 6 | 8 |
| (7) | 21 | 19 | 17 | 17 | 4 | 3 |
| (8) | 40 | 42 | 35 | 36 | 5 | 6 |

Dans ce tableau les résultats sont exprimés en $10^{-3}$% pondéraux et les échantillons soumis à l'analyse étaient des prélèvements d'aciers en cours d'élaboration effectués sous forme de «bombe» qui sont des troncs de cône hauts de 2 cm et de diamètre 3,3 et 3,7 cm.

Il va de soi que l'invention ne saurait se limiter à la description exemplifiée qui en a été donnée ci-avant, mais s'étend à de multiples variantes et équivalents dans la mesure où sont respectées les caractéristiques essentielles des revendications jointes.

En particulier, une variante de la phase de calcul pour la détermination de $[Al]_p$ peut consister à remplacer, dans la relation (1) précédente, la valeur $I_1$ par $I_3$.

Les résultats obtenus restent corrects, mais tout de même moins bons en raison du moindre écart existant entre les mesures de $I_3$ et $I_2$ qu'entre $I_1$ et $I_2$, ce qui conduit bien entendu à des erreurs relatives plus importantes. Néanmoins, la relation (1) selon l'invention, prise dans sa généralité, peut s'exprimer par:

$$[Al]_p = [Al]_t \frac{J - I_2}{I_3 - I_0}$$

où J est un paramètre, représentant soit $I_1$ soit $I_3$, au choix de l'utilisateur.

De même, le choix de la moyenne arithmétique comme valeur représentative des intensités du profil de flambage n'est qu'un exemple commode de valeur normalisée pour ces intensités, un choix de cette nature demeurant bien entendu nécessaire, tant pour la comparaison avec les abaques d'étalonnage, que pour les besoins propres du calcul selon la relation précédente qui fait intervenir des différences et rapports entre ces intensités.

De même encore, la mise en œuvre de l'invention peut s'opérer autrement que par la méthode des pulses décrite ci-avant (discrimination du signal d'étincelage). En effet, une variante opératoire, dite «par intégration», peut consister à recueillir l'intégrale du signal d'émission SEO à l'aide de points de mesure pris aux extrémités des parties différenciées (pic et palier) qui caractérisent le profil de flambage.

On comprend qu'une variante de ce type peut être mise en œuvre dans la mesure où l'on a une connaissance «a priori» des périodes qui déterminent ces différentes parties.

Si tel est le cas, l'appareillage peut alors être relativement simplifié par rapport à celui représenté sur la figure 1, puisque l'on peut alors supprimer l'unité de segmentation 16, ainsi que l'unité de pilotage 14 et remplacer, d'une part, les micro-capacités 13 par des condensateurs de capacité habituelle dans les spectromètres d'émission optique, et, d'autre part, l'appareil 15 par un voltmètre temporisé. Ce voltmètre mesure la tension aux bornes du condensateur par lecture «au vol», au bout d'une période de 10 secondes par exemple (fin du pic), puis de 20 secondes (fin de la période de transition pic-palier), puis de 40 secondes (fin du palier et fin de l'analyse).

Bien entendu, dans ce cas, les abaques d'étalonnage doivent être préétablis sur la base d'intensités SEO intégrées sur des périodes identiques, et les valeurs normalisées des intensités SEO à prendre en compte pour les calculs peuvent alors être avantageusement les valeurs intégrales du signal sur lesdites périodes.

De même, on aura compris qu'entre les deux variantes extrêmes que sont, d'un côté, la méthode dite des «pulses» basée sur un cycle de «charge-décharge» de micro-capacités 13 très bref, de l'ordre de 1/100$^e$ de seconde et, de l'autre côté, la méthode dite «par intégration» selon laquelle le signal SEO est pris en compte seulement aux extrémités des parties caractéristiques du profil, l'invention trouve un large domaine de mise en œuvre possible.

Ainsi, l'utilisateur reste totalement libre quant au choix de la durée de charge des condensateurs avant lecture, sachant toutefois qu'il devra arrêter son choix entre une durée trop courte (à savoir sensiblement inférieure à la période d'étincelage, ici 1/100$^e$ sec), conduisant à un signal discriminé dont les intensités élémentaires risquent d'être insuffisantes pour permettre un traitement de calcul satisfaisant, et une durée trop prolongée conduisant, le cas échéant, à un nombre de points de mesure insuffisant pour une exploitation correcte du profil d'étincelage, dans la mesure où celui-ci n'est pas connu à priori avec une précision souhaitable, comme c'est généralement le cas.

De même enfin, le nombre de parties à considérer du profil de flambage n'est pas limité à deux ou trois, dans la mesure où l'une d'entre elles est constituée par le pic initial et une autre définit une zone suffisamment représentative du palier terminal. Cette précision se retrouve, dans les revendications, exprimée par l'expression «en au moins deux parties».

**Revendications**

1. Procédé pour la détermination des concentrations dissoute et précipitée d'un élément, tel que l'aluminium, dans un échantillon métallique d'analyse (4) par Spectrométrie d'Emission Optique, notamment un échantillon d'acier, procédé selon lequel on détermine lesdites concentrations à partir du profil d'étincelage dans le temps (18) dudit élément et par lecture sur des abaques d'étalonnage préétablis sur des échantillons connus, procédé caractérisé en ce que:

– on soumet l'échantillon (4) à des conditions d'étincelage douces durant toute la durée de l'analyse de manière à éviter tout phénomène de refusion locale de l'échantillon,

– on partage le profil d'étincelage (18) ainsi obtenu pour l'élément à analyser, en au moins deux parties successives: une partie initiale formée d'un pic (19) et une partie terminale formée d'un palier horizontal (20),

– on considère une valeur normalisée $I_3$ de l'intensité du profil d'étincelage complet et on détermine à partir de $I_3$ la concentration totale $[M]_t$ de l'élément à analyser par lecture sur l'abaque d'étalonnage correspondant construit sur la base de ladite valeur normalisée,

– on considère une valeur normalisée $I_2$ de l'intensité du palier horizontal (20) et on détermine à partir de $I_2$ la concentration à l'état dissous $[M]_d$ de l'élément à analyser par lecture sur l'abaque d'étalonnage correspondant construit sur la base de ladite valeur normalisée,

– et à partir des valeurs $I_3$ et $I_2$ et de la concentration totale $[M]_t$ on calcule la concentration à l'état précipité $[M]_p$ de l'élément à analyser à l'aide de la relation:

$$[M]_p = [M]_t \frac{J - I_2}{I_3 - I_0}$$

où $I_0$ est la valeur à l'origine de l'intensité sur l'abaque d'étalonnage donnant la concentration totale $[M]_t$ et J est la valeur normalisée d'une intensité du profil d'étincelage représentative de la somme des concentrations à l'état dissous et précipité de l'élément à analyser.

2. Procédé selon la revendication 1 caractérisé en ce que J est la valeur normalisée $I_3$.

3. Procédé selon la revendication 1 caractérisé en ce que J est la valeur normalisée $I_1$ de l'intensité du pic du profil d'étincelage.

4. Procédé selon les revendications 1, 2 ou 3 caractérisé en ce que les valeurs normalisées sont les moyennes arithmétiques des intensités constitutives des différentes parties considérées du profil d'étincelage.

5. Procédé selon la revendication 1 caractérisé en ce que l'on partage le profil d'étincelage en trois parties successives: le pic initial (19), le palier final (20) et une partie intermédiaire correspondant à la transition entre la fin du pic et le début du palier.

6. Procédé selon la revendication 5 caractérisé en ce que les trois parties du profil d'étincelage sont définies par les intervalles de temps respectifs d'environ 0–10 secondes, 10–20 secondes et au-delà de 20 secondes jusqu'à la fin de la période d'analyse.

7. Appareil de Spectrométrie d'Emission Optique pour la détermination des concentrations d'éléments dans un échantillon d'analyse des métaux, appareil constitué par:

– un spectromètre à étincelage (1) comprenant un générateur d'excitation (3) et au moins un circuit de détection, qui est celui de la raie de l'élément à analyser, ledit circuit présentant un intégrateur (13) piloté par une commande à horloge (14);

– et un ensemble de mesure et de traitement (2) des signaux issus du circuit de détection et comprenant une unité (15) de mesure de la charge de l'intégrateur (13) et des moyens (24) de restitution des résultats reliés à cette unité (15) par une chaîne de traitement des signaux délivrés par ladite unité;

– appareil caractérisé en ce que le générateur d'excitation (3) comprend un condensateur de capacité inférieure à 10 µF, en ce que l'intégrateur (13) comprend un microcondensateur de capacité de 100 pF environ, en ce que la commande à horloge (14) est conçue pour piloter l'intégrateur (13) selon un cycle de «charge – décharge» du microcondensateur plus bref que la période d'étincelage du générateur (3), et en ce que ladite chaîne de traitement comprend successivement, depuis la sortie de l'unité (15) de mesure de la charge de l'intégrateur (13): une unité (16) de stockage et de classement des pulses constitutifs du profil d'étincelage et formés par les signaux issus de ladite unité (15); une unité (21) de segmentation dans le temps du profil d'étincelage en au moins deux parties consécutives, suivie d'une unité (22) de calcul des valeurs normalisées des intensités des différentes parties du profil d'étincelage, et qui est reliée à une entrée d'un comparateur (23) recevant sur son autre entrée des signaux représentatifs des couples de valeurs «intensité/concentration» d'abaques d'étalonnage préétablis sur des échantillons d'analyse de référence, et dont la sortie est connectée auxdits moyens (24) de restitution des résultats.

## Claims

1. A process for determining the dissolved and precipitated concentrations of an element, such as aluminum, in a metallic analysis sample (4) by Optical Emission Spectrometry, in particular a steel sample, comprising the steps of determining said concentrations on the basis of the spark erosion profile in time (18) of said element and reading on calibrating charts set for known samples, characterized by the steps of

— submitting the sample (4) to mild spark erosion conditions for the entire duration of the analysis in such a way as to avoid any phenomenon of local refusion of the sample;

— dividing the spark erosion profile (18) thus obtained for the element under analysis into at least two successive parts: an initial part formed by a peak (19) and a terminal part formed by a horizontal flat portion (20);

— considering a standardized value $I_3$ of the intensity of the complete spark erosion profile and determining on the basis of $I_3$ the total concentration $[M]_t$ of the element under analysis by reading on the corresponding calibrating chart constructed on the basis of said standardized value,

— considering a standardized value $I_2$ of the intensity of the horizontal flat portion (20) and determining on the basis of $I_2$ the concentration in the dissolved state $[M]_d$ of the element under analysis by reading on the corresponding calibrating chart constructed on the basis of said standardized value;

— and calculating on the basis of the values $I_3$ and $I_2$ and of the total concentration $[M]_t$ the concentration in the precipitated state $[M]_p$ of the element under analysis with the aid of the relation:

$$[M]_p = [M]_t \frac{J - I_2}{I_3 - I_0}$$

wherein $I_0$ is the value at the origin of the intensity on the calibrating chart giving the total concentration $[M]_t$ and J is the standardized value of an intensity of the spark erosion profile representative of the sum of concentrations in the dissolved and precipitated states of the element under analysis.

2. A process according to claim 1, characterized in that J is the standardized value $I_3$.

3. A process according to claim 1, characterized in that J is the standardized value $I_1$ of the intensity of the peak of the spark erosion profile.

4. A process according to claims 1, 2 or 3, characterized in that the standardized values are the arithmetical means of the constitutive intensities of the various considered parts of the spark erosion profile.

5. A process according to claim 1, characterized in that the spark erosion profile is divided into three successive parts: the initial peak (19), the final flat portion (20) and an intermediate part corresponding to the transition between the end of the peak and the beginning of the flat portion.

6. A process according to claim 5, characterized in that the three parts of the spark erosion profile are defined by the respective time intervals of approximately 0–10 seconds, 10–20 seconds and above 20 seconds until the end of the analysis period.

7. An Optical Emission Spectrometry apparatus for determining concentrations of elements in a metallic analysis sample, comprising:

a spark erosion spectrometer (1) comprising an excitation generator (3) and at least one detection circuit, which is that of the line of the element under analysis, said circuit having an integrator (13) controlled by a clock control (14);

and an assembly (2) for measuring and treating the signals emitted by the detection circuit and comprising a unit (15) for measuring the charge of the integrator (13) and means (24) for rendering the results connected to this unit (15) by a system for treating the signals provided by said unit;

characterized in that the excitation generator (3) comprises a capacitor whose capacitance is lower than 10 µF, in that the integrator (13) comprises a microcapacitor with a capacitance of approximately 100 pF, in that the clock control (14) is designed for controlling the integrator (13) according to a "charge — discharge" cycle of the microcapacitor shorter than the spark erosion period of the generator (3), and in that said treatment system comprises successively, as of the output of the unit (15) for measuring the charge of the integrator (13): a unit (16) for storing and classifying the constitutive pulses of the spark erosion profile which are formed by the signals emitted by said unit (15); a unit (21) for segmenting in time the spark erosion profile into at least two consecutive parts, followed by a unit (22) for calculating the standardized values of the intensities of the various parts of the spark erosion profile and which is connected to the input of a comparator (23) receiving at its other input signals representative of the pairs of "intensity/concentration" values of calibrating charts set for reference analysis samples, and whose output is connected to said means (24) for rendering the results.

## Patentansprüche

1. Verfahren zur Bestimmung der gelösten und niedergeschlagenen Konzentrationen eines Elements, wie z.B. Aluminium, in einem zu analysierenden Metallprüfling (4) mittels optischer Emissionsspektrometrie, insbesondere in einem Stahlprüfling, bei dem diese Konzentrationen bestimmt werden ausgehend vom Funkenerosionsprofil (18) als Funktion der Zeit des Elements und durch Ablesen aufgestellter Eichkurven für bekannte Prüflinge, gekennzeichnet durch die folgenden Verfahrensschritte:

– Unterwerfen des Prüflings (4) unter schwache Funkenerosionsbedingungen während der gesamten Analysedauer, um dergestalt alle örtlichen Rückstoss-Phänomene des Prüflings zu vermeiden,

– Unterteilen des derart erhaltenen Funkenerosionsprofils (18) für das zu analysierende Element in wenigstens zwei aufeinanderfolgende Abschnitte: einen Anfangsabschnitt, der durch eine Spitze (19) gebildet wird und einen Endabschnitt, der durch eine waagrechte Strecke (20) gebildet wird,

– Betrachten eines normalisierten Wertes ($I_3$) der Intensität des vollständigen Funkenerosionsprofils und Bestimmen ausgehend von ($I_3$) der Gesamtkonzentration $[M]_t$ des zu analysierenden Elements durch Ablesen der entsprechenden Eichkurve, die aufgrund des normalisierten Wertes erstellt wurde,

– Betrachten eines normalisierten Wertes ($I_2$), der Intensität der waagrechten Strecke (20) und Bestimmen ausgehend von ($I_2$) der Konzentration im gelösten Zustand $[M]_d$ des zu analysierenden Elements durch Ablesen der entsprechenden Eichkurve, die auf der Basis des normalisierten Wertes erstellt wurde,

– und Berechnen ausgehend von den Werten ($I_3$) und ($I_2$) sowie der Gesamtkonzentration $[M]_t$ die niedergeschlagene Konzentration $[M]_p$ des zu analysierenden Elementes mit Hilfe der Beziehung

$$[M]_p = [M]_t \frac{J-I_2}{I_3-I_0}$$

wobei $I_0$ der Anfangswert der Intensität der Eichkurve für die Gesamtkonzentration $[M]_t$ ist und J der normalisierte Wert einer Intensität des Funkenerosionsprofils ist, das die Summe der Konzentrationen im gelösten und niedergeschlagenen Zustand des zu analysierenden Elementes darstellt.

2. Verfahren nach Anspruch 1, dadurch gekennzeichnet, dass J der normalisierte Wert $I_3$ ist.

3. Verfahren nach Anspruch 1, dadurch gekennzeichnet, dass J der normalisierte Wert $I_1$ der Intensität der Spitze des Funkenerosionsprofils ist.

4. Verfahren nach Ansprüchen 1, 2 oder 3, dadurch gekennzeichnet, dass die normalisierten Werte die arithmetischen Mittel der aufeinanderfolgenden Intensitäten der verschiedenen betrachteten Abschnitte des Funkenerosionsprofils sind.

5. Verfahren nach Anspruch 1, dadurch gekennzeichnet, dass das Funkenerosionsprofil in drei aufeinanderfolgende Abschnitte unterteilt wird: die Anfangsspitze (19), die Endstrecke (20) und einen Zwischenabschnitt, der dem Übergang zwischen dem Ende der Spitze und dem Beginn der Strecke entspricht.

6. Verfahren nach Anspruch 5, dadurch gekennzeichnet, dass die drei Abschnitte des Funkenerosionsprofils festgelegt sind durch die zugehörigen Zeitabschnitte von ungefähr 0 bis 10 Sekunden, 10 bis 20 Sekunden und jenseits von 20 Sekunden bis zum Ende der Analysendauer.

7. Optisches Emissionsspektrometer zur Bestimmung der Konzentrationen von Elementen in metallischen zu analysierenden Prüflingen bestehend aus:

– einem Funkenerosionsspektrometer (1), das einen Erregungsgenerator (3) und wenigstens einen Messkreis aufweist für die Strahlung des zu analysierenden Elements, wobei dieser Kreis einen Integrator (13) enthält, der von einer Uhrschaltung (14) gesteuert wird,

– und einer Mess- und Verarbeitungsanordnung (2) für die vom Messkreis stammenden Signale, die eine Messeinheit (15) für die Ladung des Integrators (13) enthält sowie eine Anordnung (24) zur Darstellung der Resultate, die mit der Einheit (15) verbunden ist über eine Verarbeitungskette für die von der Einheit stammenden Signale, dadurch gekennzeichnet, dass der Erregungsgenerator (3) einen Kondensator mit einer Kapazität von weniger als 10 µF aufweist, dass der Integrator (13) einen Mikrokondensator mit einer Kapazität von ungefähr 100 pF aufweist, dass die Uhrsteuerung (14) derart ausgelegt ist, dass sie den Integrator (13) gemäss einem Zyklus «Ladung-Entladung» des Mikrokondensators steuert, der kürzer ist als die Funkenerosionsperiode des Generators (3) und dass die Verarbeitungskette aufeinanderfolgend, ausgehend vom Ausgang der Messeinheit (15) für die Ladung des Integrators (13), aufweist: eine Speicher- und Unterteileinheit (16) für die das Funkenerosionsprofil bildenden Impulse, die durch die Ausgangssignale der Einheit (15) gebildet werden; eine zeitliche Abschnitte bildende Einheit (21) für das Funkenerosionsprofil für wenigstens zwei aufeinanderfolgende Abschnitte, gefolgt von einer Recheneinheit (22) für normalisierte Werte der Intensitäten der verschiedenen Abschnitte des Funkenerosionsprofils, die mit einem Eingang eines Vergleichers (23) verbunden ist, dessen anderem Eingang die Signale zugeführt werden, die den Wertepaaren «Intensität/Konzentration» der aufgestellten Eichkurven für Vergleichsprüflinge entsprechen und dessen Ausgang mit der Anordnung (24) zur Darstellung der Resultate verbunden ist.

$$I_3^1/[Al]_t^i \quad I_2^1/[Al]_d^i$$

$[Al]_t \; \%$

$[Al]_d \; \%$

$[Al]_p \; \%$

*Fig_1*

Fig_2